(19) Europäisches Patentamt | European Patent Office | Office européen des brevets

(11) **EP 4 215 258 A1**

(12) **EUROPEAN PATENT APPLICATION**
published in accordance with Art. 153(4) EPC

(43) Date of publication:
**26.07.2023 Bulletin 2023/30**

(21) Application number: **21869178.0**

(22) Date of filing: **02.09.2021**

(51) International Patent Classification (IPC):
**B01D 39/06** (2006.01)    **B23K 20/00** (2006.01)
**C23C 10/38** (2006.01)    **C22C 1/08** (2006.01)
**C22C 19/03** (2006.01)    **C22C 19/05** (2006.01)
**C23C 8/16** (2006.01)

(52) Cooperative Patent Classification (CPC):
**B01D 39/06; B23K 20/00; C22C 1/08; C22C 19/03; C22C 19/05; C23C 8/16; C23C 10/38**

(86) International application number:
**PCT/JP2021/032215**

(87) International publication number:
**WO 2022/059491 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.09.2020  JP 2020156399**
**29.09.2020  JP 2020163246**
**07.10.2020  JP 2020169661**

(71) Applicant: **Sumitomo Electric Toyama Co., Ltd.**
**Imizu-shi**
**Toyama 934-8522 (JP)**

(72) Inventors:
• **TSUCHIDA Hitoshi**
**Imizu-shi, Toyama 934-8522 (JP)**
• **MABUCHI Seiji**
**Imizu-shi, Toyama 934-8522 (JP)**

(74) Representative: **Boult Wade Tennant LLP**
**Salisbury Square House**
**8 Salisbury Square**
**London EC4Y 8AP (GB)**

(54) **POROUS METAL BODY, METHOD FOR PRODUCING POROUS METAL BODY, AND FILTER**

(57)    A metal porous body includes a three-dimensional mesh-like skeleton. The metal porous body has a bottom surface having a polygonal shape and has a curved shape from the bottom surface toward an apex. The bottom surface has a side having a length of 2 mm to 10 mm, and a height from the bottom surface to the apex is 1 mm to 5 mm.

**FIG. 1**

EP 4 215 258 A1

**Description**

Technical Field

The present disclosure relates to a metal porous body and a method of manufacturing a metal porous body, and a filter. This application claims priority based on Japanese Patent Applications No. 2020-156399 filed on September 17, 2020, No. 2020-163246 filed on September 29, 2020, and No. 2020-169661 filed on October 7, 2020, and the entire contents of the Japanese patent applications are incorporated herein by reference.

Background Art

A sheet-like metal porous body having a skeleton with a three-dimensional mesh-like structure is used in various applications such as a filter, a catalyst support, a metal composite material, and an electrode plate for a battery. Celmet (manufactured by Sumitomo Electric Industries, Ltd., registered trade mark), which is a metal porous body made of nickel, is widely used in various industrial fields, for example, an electrode of an alkaline storage battery such as a nickel-hydrogen battery and a support of an industrial deodorizing catalyst.

The metal porous body can be manufactured by a so-called plating method. For example, the metal porous body can be manufactured by subjecting the surface of skeleton of a resin porous body having the skeleton with a three-dimensional mesh-like structure to a conductive treatment, subjecting the surface of skeleton of the resin porous body to metal plating by an electroplating treatment, and then removing the resin porous body (PTL 1: Japanese Unexamined Patent Application Publication No. H05-031446 and PTL 2: Japanese Unexamined Patent Application Publication No. 2011-225950). As the resin porous body, for example, a polyurethane resin can be preferably used.

Citation List

Patent Literature

PTL 1: Japanese Unexamined Patent Application Publication No. H05-031446
PTL 2: Japanese Unexamined Patent Application Publication No. 2011-225950

Summary of Invention

A metal porous body according to the present disclosure is a metal porous body that includes a three-dimensional mesh-like skeleton. The metal porous body has a bottom surface having a polygonal shape and has a curved shape from the bottom surface toward an apex. The bottom surface has a side having a length of 2 mm to 10 mm, and a height from the bottom surface to the apex is 1 mm to 5 mm.

A metal porous body according to another embodiment of the present disclosure is a metal porous body that includes a three-dimensional mesh-like skeleton. The metal porous body has a bottom surface having a circular shape and has a hemispherical shape from the bottom surface toward an apex. The bottom surface has a diameter of 2 mm to 10 mm, and a height from the bottom surface to the apex is 1 mm to 5 mm.

A method of manufacturing a metal porous body according to the present disclosure is a method of manufacturing a metal porous body that includes cutting a metal porous body base having a skeleton with a three-dimensional mesh-like structure. In the method, the metal porous body has a bottom surface having a polygonal shape and has a curved shape from the bottom surface toward an apex, or has a bottom surface having a circular shape and has a hemispherical shape from the bottom surface toward an apex.

A filter according to the present disclosure is a filter that includes the metal porous body according to the present disclosure.

Brief Description of Drawings

FIG. 1 is a schematic view of a metal porous body according to an embodiment of the present disclosure.
FIG. 2 is another schematic view of a metal porous body according to an embodiment of the present disclosure.
FIG. 3 is an example of a photograph obtained by observing a bottom surface of a metal porous body according to an embodiment of the present disclosure.

FIG. 4 is an enlarged schematic view of a cross-section of a metal porous body according to an embodiment of the present disclosure.

FIG. 5 is a schematic view of a metal porous body according to an embodiment of the present disclosure which is filled in an accommodating part of a filter.

FIG. 6 is a schematic view of a metal porous body base having a skeleton with a three-dimensional mesh-like structure.

FIG. 7 is a view showing an example of a cut portion of a metal porous body base for manufacturing the metal porous body shown in FIG. 1.

FIG. 8 is a schematic view showing a configuration of a filter produced in Examples.

FIG. 9 is a schematic view showing a configuration of an apparatus for measuring a pressure loss of filters produced in Examples and Comparative Examples.

FIG. 10 is a schematic view showing a configuration of a filter produced in Comparative Example.

Description of Embodiments

[Problems to be Solved by the Present Disclosure]

When a metal porous body having a skeleton with a three-dimensional mesh-like structure as described above is produced by a plating method, it has been difficult to manufacture a thick metal porous body. The reason is that, in the plating method, a plating film is gradually formed from an end portion in a thickness direction of a base, and the formation of the plating film is delayed in a vicinity of the central portion in the thickness direction, so that when the thickness of the base material is too thick, the thickness of the plating film in the vicinity of the central portion in the thickness direction becomes thin, and in an extreme case, the base is broken into two pieces in the vicinity of the central portion in the thickness direction after plating.

Therefore, when the metal porous body obtained by the plating method is used as, for example, a filter, it was necessary to laminate a plurality of metal porous bodies in the accommodating part of the filter and use it in order to secure the thickness. However, as a result of repeated studies by the present inventors, it has been found that when a plurality of metal porous bodies is laminated and used, when the first metal porous body is clogged, the pressure loss increases, and the second and subsequent metal porous bodies may not be able to function sufficiently as a filter.

[Advantageous Effects of the Present Disclosure]

It is an object of the present disclosure to provide a metal porous body that can suppress an increase in pressure loss and can prolong the life of a filter function when used for a filter.

[Description of Embodiments of the Present Disclosure]

First, embodiments according to the present disclosure will be listed and described.

A metal porous body according to an embodiment of the present disclosure is a metal porous body that includes a three-dimensional mesh-like skeleton. The metal porous body has a bottom surface having a polygonal shape and has a curved shape from the bottom surface toward an apex. The bottom surface has a side having a length of 2 mm to 10 mm, and a height from the bottom surface to the apex is 1 mm to 5 mm. With such a configuration, it is possible to provide a metal porous body that can suppress an increase in pressure loss and can prolong the life of a filter function when used for a filter.

A metal porous body according to another embodiment of the present disclosure is a metal porous body that includes a three-dimensional mesh-like skeleton. The metal porous body has a bottom surface having a circular shape and has a hemispherical shape from the bottom surface toward an apex. The bottom surface has a diameter of 2 mm to 10 mm, and a height from the bottom surface to the apex is 1 mm to 5 mm. With such a configuration, when the metal porous body is used for a filter, it is possible to provide a metal porous body that can suppress an increase in pressure loss and can prolong the life of a filter function.

In the metal porous body, the skeleton may contain nickel as a main component and contain at least one of chromium, tin, or cobalt as an additive component. With such a configuration, it is possible to provide a metal porous body having excellent heat resistance and corrosion resistance.

The metal porous body may have an average pore size of 400 $\mu$m to 1000 $\mu$m. With such a configuration, it is possible to provide a metal porous body having a pore size suitable for a particle size to be collected.

A method of manufacturing a metal porous body according to an embodiment of the present disclosure is a method of manufacturing a metal porous body that includes cutting a metal porous body base having a skeleton with a three-dimensional mesh-like structure. In the method, the metal porous body has a bottom surface having a polygonal shape and has a curved shape from the bottom surface toward an apex, or has a bottom surface having a circular shape and has a hemispherical shape from the bottom surface toward an apex. With such a configuration, it is possible to provide a method of manufacturing a metal porous body that can suppress an increase in pressure loss and can prolong the life of a filter function when used for a filter.

A filter according to an embodiment of the present disclosure is a filter that includes the metal porous body according to the present disclosure. With such a structure, it is possible to provide a filter that can prolong the life of a filter function.

[Details of Embodiment of the Present Disclosure]

Specific examples of a metal porous body and a method of manufacturing a metal porous body according to an embodiment of the present disclosure will be described in more detail. The present disclosure is not limited to these examples, but is defined by the scope of the claims, and is intended to include all modifications within the meaning and scope equivalent to the scope of the claims.

<Metal Porous Body>

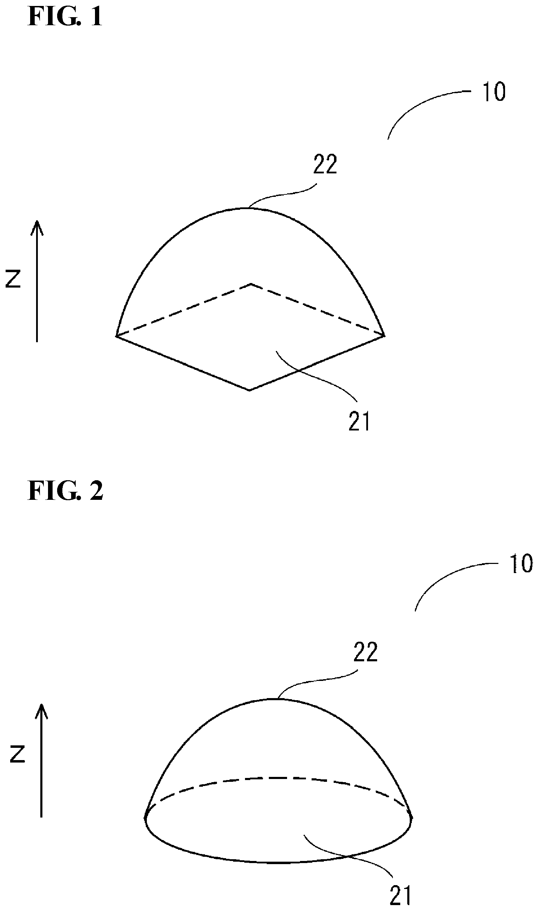

FIG. 1 schematically shows an example of a metal porous body 10 according to an embodiment of the present disclosure. Metal porous body 10 has a bottom surface 21 having a polygonal shape and has a curved shape from bottom surface 21 toward an apex 22. Bottom surface 21 may have a side having a length of 2 mm to 10 mm. Bottom surface 21 may have a square shape or a rectangular shape. Bottom surface 21 may have a side having a length of 2 mm to 8 mm, or may have a side having a length of 2.5 mm to 4.5 mm. A height from bottom surface 21 to apex 22 may be 1 mm to 5 mm, may be 2 mm to 8 mm, or may be 2.5 mm to 4 mm. The height is defined as a length of a perpendicular line from apex 22 to bottom surface 21. Examples of the polygonal shape include, for example, a quadrangular shape, a pentagonal shape, a hexagonal shape and the like.

Metal porous body 10 shown in FIG. 2 has bottom surface 21 having a circular shape and has a hemispherical shape from bottom surface 21 toward apex 22. Bottom surface 21 may have a diameter of 2 mm to 10 mm, may have a diameter of 2 mm to 8 mm, or may have a diameter of 2.5 mm to 4.5 mm. A height from bottom surface 21 to apex 22 may be 1 mm to 5 mm, may be 2 mm to 8 mm, or may be 2.5 mm to 4 mm. The circular shape of the bottom surface may be a perfect circle or an ellipse. In the case of an ellipse, an average diameter of the major axis and the minor axis is treated as the diameter. Further, the height is defined as a length of a perpendicular line from apex 22 to bottom surface 21. The hemispherical shape may be a hemisphere or a semi-ellipsoid.

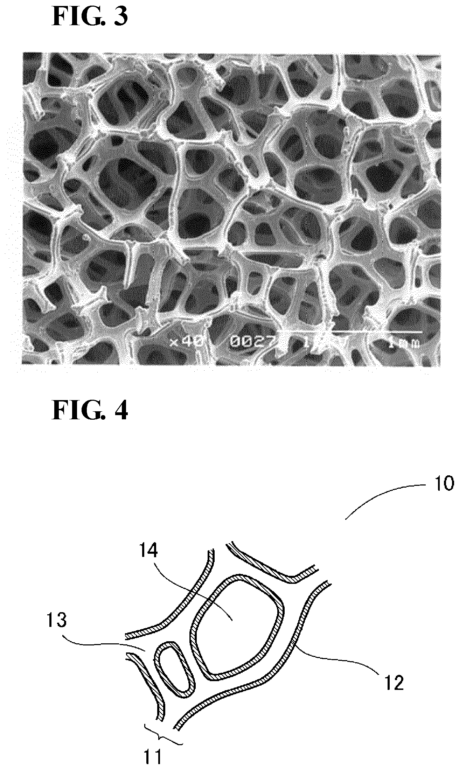

Metal porous body 10 has a skeleton with a three-dimensional mesh-like structure. FIG. 3 is an enlarged photograph obtained by observing bottom surface 21 of metal porous body 10. FIG. 4 is an enlarged schematic view of a cross-section of metal porous body 10 shown in FIG. 3. A skeleton 11 of metal porous body 10 is typically formed by a film 12 made of a metal or an alloy. An inner portion 13 of skeleton 11 is hollow. Further, a pore portion 14 formed by skeleton 11 is an interconnected pore that cells, which may be modeled as a regular dodecahedron, are connected to each other from the surface to the interior of metal porous body 10 to form.

Skeleton 11 of metal porous body 10 may be formed of film 12 made of a metal or an alloy. Examples of the metal forming skeleton 11 include nickel, aluminum, and copper. Examples of the alloy forming skeleton 11 include alloys in which another metal is inevitably or intentionally added to the above-described metals. Examples of the alloy include alloys containing nickel as a main component and at least one selected from the group consisting of chromium, tin, and cobalt as an additive component, in which these components are alloyed, such as NiCr, NiSn, and NiCo. In this manner, a metal porous body having excellent heat resistance and corrosion resistance can be provided. In addition, skeleton 11 may have a laminated structure having two or more layers of film 12 made of a metal or an alloy by further plating the surface of the metal or the alloy with another metal.

Containing nickel as a main component in skeleton 11 means that nickel is the most abundant component in the components forming skeleton 11. In film 12 made of a metal or an alloy, a content of Cr may be 10 mass% or more and less than 50 mass%. Similarly, a content of Sn may be 5 mass% to 30 mass%, and a content of Co may be 10 mass% to 50 mass%.

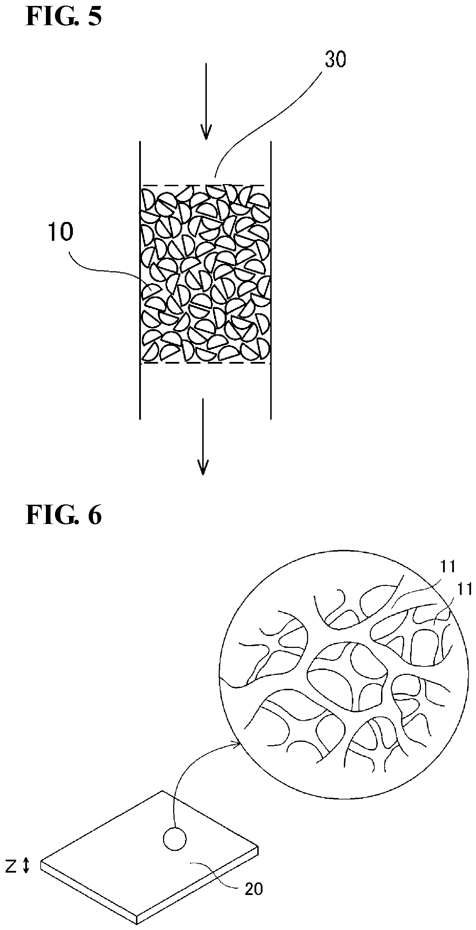

Metal porous body 10 can be accommodated in an accommodating part of a filter at a high filling rate by having a shape as shown in FIG. 1 or FIG. 2. FIG. 5 is a schematic view of metal porous body 10 shown in FIG. 1 which is accommodated in the accommodating part 30 of a filter. The metal porous body having the shape (the bottom surface has a circular shape) shown in FIG. 2 has a higher filling rate into the accommodating part of the filter than the metal porous body having the shape (the bottom surface has a quadrangular shape) shown in FIG. 1.

A fluid containing objects to be collected flows from an upstream side (the upper side in FIG. 5) toward a downstream side (the lower side in FIG. 5). At this time, the objects to be collected in the fluid are caught by pore portion 14 of metal porous body 10 and collected. In addition, although some of the objects to be collected slip through gaps between metal porous bodies 10 and move from the upstream side to the downstream side, when accommodating part 30 of the filter is filled with a sufficient amount of metal porous bodies 10, the slipped objects to be collected are collected in pore portion 14 of metal porous body 10 disposed on the downstream side.

An average pore size of metal porous body 10 may be appropriately changed in accordance with the size of an object to be collected when metal porous body 10 is used for a filter. For example, metal porous body 10 may have an average pore size of 400 μm to 1000 μm, 500 μm to 950 μm, or 600 μm to 900 μm.

The average pore size of metal porous body 10 is defined by the following Formula (1). In the Formula (1), nc is an average number of pore portions 14 per inch (25.4 mm = 25400 μm) obtained by observing a main surface of metal porous body 10 in at least 10 fields of view with a microscope or the like.

[Formula 1]

$$\text{Average pore size} = 25400 \ \mu\text{m/nc} \qquad (1)$$

The measurement of the number of pore portions 14 is performed in accordance with the determination of the number of pores (number of cells) for flexible cellular polymeric materials according to JIS K6400-1:2004 Annex 1 (reference).

When metal porous body 10 is used for a filter, it is desirable that the porosity of metal porous body 10 be such that metal porous body 10 has an excellent ability to collect an object to be collected and a small pressure loss. Metal porous body 10 may have a porosity of 60% to 98%, 70% to 98%, or 90% to 98%, for example. As will be described later, metal porous body 10 is manufactured by being cut out from a metal porous body base 20. In many cases, since metal porous body base 20 has a porosity of about 98% immediately after manufacturing, metal porous body 10 may be cut out after metal porous body base 20 is compressed in a thickness direction Z to adjust the porosity.

The porosity of metal porous body 10 is defined by the following Formula (2).

[Formula 2]

$$\text{Porosity} \ (\%) = [1 - \{Mp/(Vp \times dp)\}] \times 100 \qquad (2)$$

where Mp is a mass (g) of a metal porous body,
Vp is a volume (cm$^3$) of an appearance shape of the metal porous body, and
Dp is a density (g/cm$^3$) of a metal forming the metal porous body.

Although a case where metal porous body 10 is used for a filter has been described above, the use of metal porous body 10 is not limited to a filter. For example, a catalyst may be supported on a surface of skeleton 11 of metal porous body 10 and may be used for a catalyst support to modify an object in a fluid. Also in this case, it is possible to suppress an increase in pressure loss and to prolong the life of a function of the catalyst as in the case where metal porous body 10 is used for a filter.

<Method of Manufacturing Metal Porous Body>

Metal porous body base 20 as shown in FIG. 6 is prepared. Metal porous body base 20 has skeleton 11 with a three-dimensional mesh-like structure, and has a flat plate-like appearance as a whole. The porosity, average pore size, and the like of metal porous body base 20 may be the same as those required for metal porous body 10. Similarly to metal porous body 10, metal porous body base 20 may be prepared such that the inner portion of the skeleton is hollow and the pore portion is formed by the skeleton. The porosity and average pore size of metal porous body base 20 are defined in the same manner as the porosity and average pore size of metal porous body 10 described above. As a metal porous body having a skeleton with a three-dimensional mesh-like structure, for example, Celmet (a metal porous body containing Ni as a main component, "Celmet" is a registered trademark.) manufactured by Sumitomo Electric Industries, Ltd. may be preferably used.

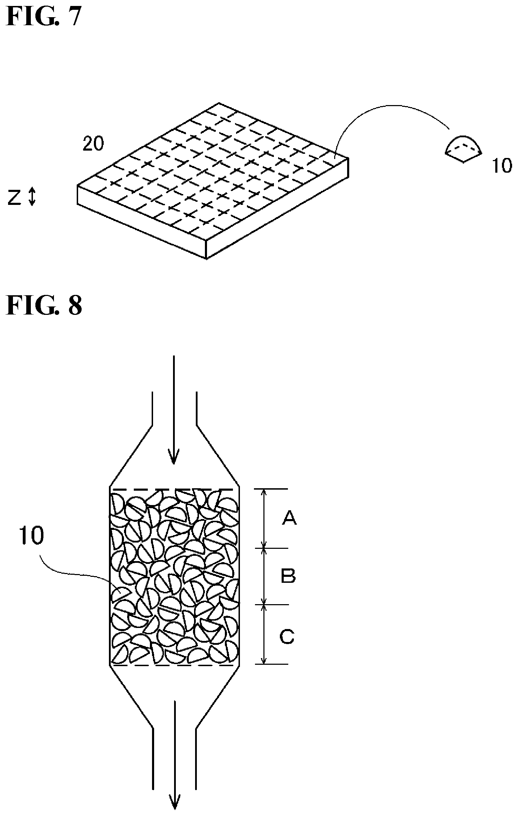

Metal porous body base 20 prepared as described above is cut to obtain metal porous body 10 according to the embodiment of the present disclosure. FIG. 7 shows an outline of a step of cutting metal porous body base 20. Metal porous body base 20 with a flat plate-like shape is cut in thickness direction Z along the dashed line portion in FIG. 7 so as to form a quadrangular shape with a side having a length of 2 mm to 10 mm to manufacture metal porous body 10 shown in FIG. 1. Since metal porous body base 20 in which the inner portion of the skeleton is hollow is easily deformed when a force is applied, during a cutting processing, the cut portion is crushed and reduced in thickness to be separated at the bottom surface portion. As a result, the central portion of the quadrangle becomes apex 22, and slopes are formed from apex 22 toward the four sides of the bottom surface portion to form a curved shape.

When metal porous body 10 shown in FIG. 2 is manufactured, a circular shaped metal porous body may be punched out from metal porous body base 20 with a blade, for example, so as to have a diameter of 2 mm to 10 mm. As a result, the circumferential portion against which the blade is pressed is crushed and reduced in thickness to be separated at the bottom surface portion of metal porous body base 20. Separated metal porous body 10 has apex 22 at the central portion of the circular shape, and a hemispherical shape with a slope from apex 22 toward the circumferential portion of the bottom surface portion.

Metal porous body base 20 may have a thickness of less than 3 mm. This allows a metal porous body base in which the thickness of film 12 made of a metal or an alloy forming the skeleton near the central portion in the thickness direction of the metal porous body base is sufficiently thick to be prepared. To manufacture metal porous body 10 having a height of 3 mm or more from bottom surface 21 to apex 22, a plurality of metal porous body bases 20 having thicknesses of less than 3 mm may be laminated in the thickness direction and cut in the laminated state. Cutting metal porous body bases 20 in the laminated state causes, for example, the skeleton of a portion to which a blade is applied to be crushed and entangled with each other, thereby bonding metal porous body bases 20 to each other. In metal porous body 10 according to the embodiment of the present disclosure, since the size of bottom surface 21 is small relative to the height from bottom surface 21 to apex 22, the adhesive force due to the entanglement of the skeletons in a peripheral portion is sufficient, so that metal porous body base 20 can be used in an integrated state without being separated from each other. The thickness of metal porous body base 20 can be measured with, for example, a digital thickness gauge.

EXAMPLES

Hereinafter, the present disclosure will be described in more detail based on examples, but these examples are merely illustrative, and the metal porous body and the like of the present disclosure are not limited thereto. The scope of the present disclosure is defined by the description of the claims, and includes all modifications within the meaning and scope equivalent to the description of the claims.

[Example 1]

As a metal porous body base having a skeleton of a three-dimensional mesh-like structure, a nickel porous body (Celmet #4 manufactured by Sumitomo Electric Industries, Ltd.) having a thickness of 2.0 mm, a porosity of 93%, and an average pore size of 850 $\mu$m was prepared. The prepared nickel porous body was cut with a punching blade die so that a bottom surface had a quadrangular shape with a size of 4 mm $\times$ 4 mm to manufacture a metal porous body No. 1 having the shape shown in FIG. 1.

[Example 2]

A metal porous body No. 2 having the shape shown in FIG. 2 was manufactured in the same manner as in Example 1 except that the nickel porous body was cut with a round blade so that the bottom surface had a circular shape with a diameter of 2.5 mm in the manufacturing method described in Example 1.

[Example 3]

A metal porous body No. 3 having the shape shown in FIG. 1 was manufactured in the same manner as in Example 1 except that two nickel porous bodies were laminated in thickness direction Z and cut with a punching blade die in the laminated state in the manufacturing method described in Example 1.

[Evaluation]

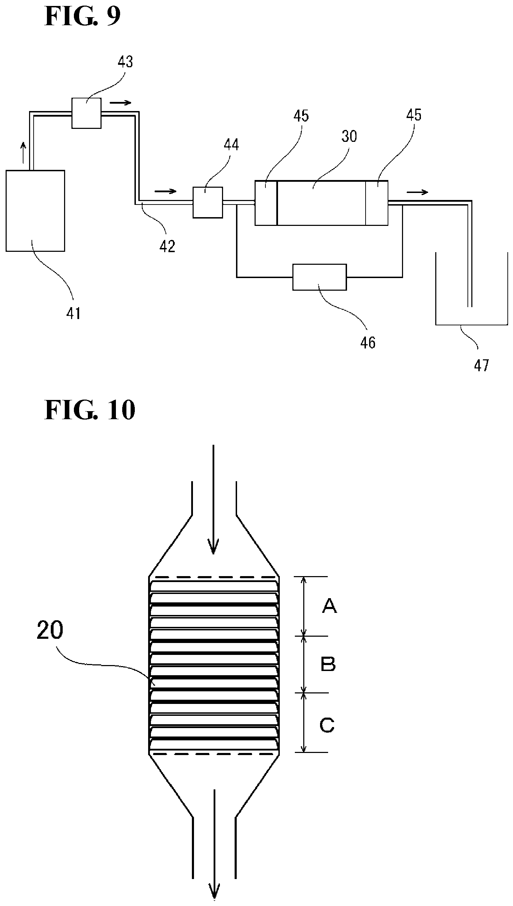

As shown in FIG. 8, metal porous body No. 1 was accommodated in an accommodating part of a filter to produce a filter No. 1. Powders having a diameter of 5 $\mu$mm (eight types of test powders for JIS Z 8901), were prepared as objects to be collected. These powders were passed through filter No. 1 together with an air flow (dry air). A flow rate of the air flow was 1 L/min, and a flow time was 5 minutes. A content ratio of the powders in the air flow was 5 mg/m$^2$. FIG. 9 is a schematic view showing an overview of a configuration of an apparatus for measuring a pressure loss of filter No. 1. In this apparatus, dry air and powders were prepared in a supply container 41, and an air flow was passed through filter No. 1 through a stainless steel pipe 42. The flow rate of the air flow was adjusted by a regulator 43 to 1 L/min as measured by a flow meter 44. A pressure loss caused by the air flow passing through the filter No. 1 accommodated in accommodating part 30 of the filter was measured with a pressure gauge 45 and a fine pressure difference meter 46. The length of accommodating part 30 of the filter was set to 10 cm, and the pressure loss was defined as a pressure loss per length. Powders which passed through filter No. 1 was collected in a collection container 47. Thereafter, a collection rate was calculated. A pressure loss after 30 seconds from the start of the air flow was 22 Pa/cm. This was performed as the first test, and then the second and third tests were continuously carried out in the same manner. As a result, no increase in pressure loss was observed. After the air flow was completed, as shown in FIG. 8, filter No. 1 was divided into three equal regions from a region A to a region C from the upstream side to the downstream side, metal porous bodies No. 1 which were located near central portions of respective regions were taken out to observe how many powders were collected in pore portions. As a result, there was almost no difference in the number of powders collected in the pore portions of the metal porous bodies No. 1 located near the central portions of respective regions A, B, and C. The results are shown in Table 1.

With respect to metal porous body No. 2 and gold-group porous body No. 3, a filter No. 2 and a filter No. 3 were produced in the same manner as in metal porous body No. 1, respectively and evaluated. As a result, a pressure loss (first test) was 20 Pa/cm when metal porous body No. 2 was used, and a pressure loss (first test) was 22 Pa/cm when metal porous body No. 3 was used. When the second and third tests were continuously carried out in the same manner, no increase in pressure loss was observed. In both metal porous body No. 2 and metal porous body No. 3, there was almost no difference in the number of powders collected in the pore portions of metal porous bodies located near the central portions of respective regions A, B, and C. The results are shown in Table 1.

[Comparative Example]

For comparison, the metal porous body bases prepared in Example 1 were laminated and accommodated in an accommodating part of a filter, as shown in FIG. 10, to produce a filter No. 4. When evaluation was performed in the same manner as in Examples, a pressure loss was 45 Pa/cm. When the second and third tests were continuously carried out in the same manner, the pressure loss increased as the number of tests was increased. When the amounts of the powders collected in the pore portions of the metal porous body bases located near the central portions of respective regions A, B, and C were examined, collection positions were unevenly distributed, most of the powders were collected and clogged in region A, and almost no powders were observed in regions B and C. The results are shown in Table 1.

[Table 1]

| Filter No. | Pore size ($\mu$m) | Thickness (mm) | Size of bottom surface | Shape of bottom surface | Pressure loss (Pa/cm) | | | Number of powders in each region | | | Collection rate (%) |
|---|---|---|---|---|---|---|---|---|---|---|---|
| | | | | | 1 st | 2nd | 3rd | A | B | C | |
| 1 | 850 | 2 | 4 mm × 4 mm | Quadrangular | 22 | 21 | 20 | Same level | | | 40 |
| 2 | 850 | 2 | 2.5 mm in diameter | Circular | 20 | 20 | 19 | Same level | | | 42 |
| 3 | 850 | 4 | 4 mm × 4 mm | Quadrangular | 22 | 21 | 21 | Same level | | | 40 |
| 4 | 850 | 2 | - | - | 44 | 55 | 65 | Many | Few | Few | 43 |

Reference Signs List

| | |
|---|---|
| 10 | metal porous body |
| 11 | skeleton |
| 12 | film made of metal or alloy |
| 13 | inner portion |
| 14 | pore portion |
| 20 | metal porous body base |
| 21 | bottom surface |
| 22 | apex |
| 30 | accommodating part of filter |
| 41 | supply container |
| 42 | stainless steel pipe |
| 43 | regulator |
| 44 | flow meter |
| 45 | pressure gauge |
| 46 | fine pressure difference meter |
| 47 | collection container |
| Z | thickness direction |
| A, B, C | region |

**Claims**

1. A metal porous body comprising:

   a three-dimensional mesh-like skeleton,
   wherein the metal porous body has a bottom surface having a polygonal shape and has a curved shape from the bottom surface toward an apex,
   the bottom surface has a side having a length of 2 mm to 10 mm, and
   a height from the bottom surface to the apex is 1 mm to 5 mm.

2. A metal porous body comprising:

   a three-dimensional mesh-like skeleton,
   wherein the metal porous body has a bottom surface having a circular shape and has a hemispherical shape from the bottom surface toward an apex,
   the bottom surface has a diameter of 2 mm to 10 mm, and
   a height from the bottom surface to the apex is 1 mm to 5 mm.

3. The metal porous body according to claim 1 or 2,
   wherein the skeleton contains nickel as a main component and contains at least one of chromium, tin, or cobalt as an additive component.

4. The metal porous body according to any one of claims 1 to 3, having an average pore size of 400 $\mu$m to 1000 $\mu$m.

5. A method of manufacturing a metal porous body, the method comprising:

   cutting a metal porous body base having a skeleton with a three-dimensional mesh-like structure,
   wherein the metal porous body has a bottom surface having a polygonal shape and has a curved shape from the bottom surface toward an apex, or has a bottom surface having a circular shape and has a hemispherical shape from the bottom surface toward an apex.

6. A filter comprising the metal porous body according to any one of claims 1 to 4.

FIG. 1

Z

22

10

21

FIG. 2

Z

22

10

21

## FIG. 3

## FIG. 4

# FIG. 5

# FIG. 6

## FIG. 7

20

Z ↕

10

## FIG. 8

10

A

B

C

**FIG. 9**

**FIG. 10**

## INTERNATIONAL SEARCH REPORT

International application No.

**PCT/JP2021/032215**

**A. CLASSIFICATION OF SUBJECT MATTER**

***B01D 39/06***(2006.01)i; ***B23K 20/00***(2006.01)i; ***C23C 10/38***(2006.01)i; ***C22C 1/08***(2006.01)i; ***C22C 19/03***(2006.01)i; ***C22C 19/05***(2006.01)i; ***C23C 8/16***(2006.01)i
FI: C22C1/08 Z; B23K20/00 Z; C22C19/05 J; C22C19/05 Z; B01D39/06; C22C19/03 Z; C23C10/38; C23C8/16

According to International Patent Classification (IPC) or to both national classification and IPC

**B. FIELDS SEARCHED**

Minimum documentation searched (classification system followed by classification symbols)

B01D39/06; B23K20/00; C23C10/38; C22C1/08; C22C19/03; C22C19/05; C23C8/16

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-527767 A (POROSTEON DEVELOPMENT LLC) 03 October 2019 (2019-10-03) claims, paragraphs [0002], [0082], [0095], [0135]-[0136], [0155], fig. 18 | 1-6 |
| A | WO 2020/044776 A1 (SUMITOMO ELECTRIC TOYAMA CO., LTD.) 05 March 2020 (2020-03-05) claims, paragraphs [0022], [0033] | 1-6 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **24 September 2021** | **05 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT

Information on patent family members

International application No.

**PCT/JP2021/032215**

| Patent document cited in search report | | | Publication date (day/month/year) | Patent family member(s) | | | Publication date (day/month/year) |
|---|---|---|---|---|---|---|---|
| JP | 2019-527767 | A | 03 October 2019 | WO<br>page 1, lines 11-13, page 20,<br>lines 13-19, page 23, lines 12-<br>20, page 33, line 3 to page 34,<br>line 10, page 36, lines 16-17,<br>claims, fig. 18<br>US | 2018/009582<br><br><br><br><br><br>2019/0184058 | A1<br><br><br><br><br><br>A1 | |
| WO | 2020/044776 | A1 | 05 March 2020 | EP<br>paragraphs [0020], [0031],<br>claims<br>US | 3674430<br><br><br>2020/0274170 | A1<br><br><br>A1 | |

Form PCT/ISA/210 (patent family annex) (January 2015)

16

**EP 4 215 258 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020156399 A
- JP 2020163246 A
- JP 2020169661 A
- JP H05031446 A
- JP 2011225950 A